# EUROPÄISCHE PATENTANMELDUNG

(11) **EP 1 580 676 A2**
(43) Veröffentlichungstag der Anmeldung: **28.09.2005**
(21) Anmeldenummer: 04021269.8
(22) Anmeldetag: 08.09.2004
(51) Int. Cl.: G06F 17/60

(54) **Verfahren, computerlesbares Medium und Web-basiertes Kommunikationssystem zum Führen eines Benutzers**

(30) Priorität: 10.12.2003 DE 10357562
(71) Anmelder: Deutsche Telekom AG, 53113 Bonn (DE)
(72) Erfinder: Xia, Weiqun, Dr., 64291 Darmstadt (DE)

(57) **Zusammenfassung**

Die Erfindung betrifft ein Verfahren zum Implementieren eines interaktiven Kommunikationssystems (10) zum Führen eines Benutzers zu wenigstens einem gewünschten Element unter Verwendung eines Kommunikationssystems, ein computerlesbares Medium mit einem gespeicherten Programm zur Durchführung des Verfahrens, sowie ein Web-basiertes Kommunikationssystem zum Führen eines Benutzers zu wenigstens einem gewünschten Element.

Ein wesentliches Hindernis auf dem Weg, die richtige Information oder ein geeignetes IT-Tool zu finden, ist darin zu sehen, dass die Bedürfnisse eines Benutzers in der Struktur der Informationsverteilung sowie bei der Suche danach nicht ausreichend berücksichtigt werden.

Ein Kerngedanke der Erfindung ist darin zu sehen, eine Interaktion zwischen einem Benutzer und einem Web-basierten Kommunikationssystem (10) zu schaffen, um den Benutzer zumindest teilweise automatisiert zu den richtigen Informationen und zu den richtigen Werkzeugen (IT-Tools) zu führen, die sich zur Lösung eines Problems des Benutzers eignen. Ausgehend von den Bedürfnissen (Ziel, Strategie, Aufgabe) eines Benutzers sowie dessen individuellen Benutzerprofil (wie zum Beispiel Benutzertyp, Position im Unternehmen, Abteilung, Größe des Unternehmens) wird ein Weg zur gewünschten Information und/oder zu einem geeigneten Werkzeug vorgeschlagen.

## Beschreibung

Die Erfindung betrifft ein Verfahren zum Implementieren eines interaktiven Kommunikationssystems zum Führen eines Benutzers zu wenigstens einem gewünschten Element unter Verwendung eines Kommunikationssystems, ein computerlesbares Medium mit einem gespeicherten Programm zur Durchführung des Verfahrens, sowie ein Web-basiertes Kommunikationssystem zum Führen eines Benutzers zu wenigstens einem gewünschten Element.

In Datennetzen, wie zum Beispiel dem Internet, werden immer mehr kostenpflichtige und kostenlose Informationen für die Kunden bereitgestellt. Um Kunden, die auf Informationen zugreifen wollen, eine gewisse Übersicht zu geben, sind die Informationen in den meisten Fällen in Themenbereiche unterteilt. Allerdings schwankt die Qualität der Verteilung von Informationen von Anbietern zu Anbieter stark. Für Kunden, die nach bestimmten Informationen suchen müssen, ist es häufig sehr zeitaufwendig, schnell und sicher an die benötigten Informationen zu kommen. Ein Grund hierfür ist darin zu sehen, dass der Benutzer sich selbst genaue Gedanken machen muss, wo er in der Informationsstruktur navigieren muss, um eine bestimmte Information, beispielsweise für die Erledigung einer Geschäftsaufgabe oder für das Erreichen seiner Ziele, zu finden. Wenn der Benutzer in einem anscheinend richtigen Themenbereich sucht, der aber nicht mit geeigneten Inhalten gefüllt ist, oder wenn der für den Zweck des Benutzers geeignete Themenbereich in der Struktur der Informationsverteilung nicht vorhanden ist, führt die Suche nicht zu den gewünschten Informationen. Für den Fall, dass der Benutzer eine Suchmaschine, wie zum Beispiel Yahoo oder Google anwendet, werden ihm nach dem Start der Suche eine viel zu große Menge von Hinweisen, Links und Begriffen angeboten. In diesem Fall ist der Benutzer häufig überfordert, die richtige Information aus dem Angebot herauszufiltern.

Ein ähnliches Problem ergibt sich bei der Auswahl von IT-Tools, die zum Beispiel für die Abwicklung von Geschäftsvorgängen benötigt werden. Denn Hersteller oder Anbieter von IT-Tools informieren meistens nur darüber, welche Funktionen ihre IT-Tools besitzen. Um allerdings herauszufinden, ob und welche IT-Tools für spezifische Geschäftsaufgaben geeignet sind, ist ein hoher Suchaufwand notwendig. Zwar gibt es einige Internet-Dienste, wie zum Beispiel den Content-Manager, der Produkte und Anbieter auflistet. Die grobe Beschreibung der IT-Tools oder eine allgemeine Aussage vom Hersteller oder Anbieter über die Funktionen der IT-Tools reicht nicht aus, um einem Benutzer bei der Wahl zu helfen, ein geeignetes IT-Tool für seinen Geschäftsprozess auszuwählen.

Ein wesentliches Hindernis auf dem Weg, die richtige Information oder ein geeignetes IT-Tool zu finden, ist darin zu sehen, dass die Bedürfnisse eines Benutzers in der Struktur der Informationsverteilung sowie bei der Suche danach nicht ausreichend berücksichtigt werden.

Der vorliegenden Erfindung liegt daher die Aufgabe zugrunde, ein Verfahren, ein Web-basiertes Kommunikationssystem sowie ein computerlesbares Medium mit einem darauf abgelegten Programm bereitzustellen, die einen Benutzer dabei unterstützen, bei der Erledigung einer speziellen Geschäftsaufgabe oder dem Erreichen eines vorgegebenen Ziels rasch und auf einfachem Wege zu einem gewünschten Werkzeug oder einer geeigneten Information zu gelangen.

Ein Kerngedanke der Erfindung ist darin zu sehen, eine Interaktion zwischen einem Benutzer und einem Web-basierten Kommunikationssystem zu schaffen, um den Benutzer zumindest teilweise automatisiert zu den richtigen Informationen, die kontextabhängig bereitgestellt werden, und zu den richtigen Werkzeugen (IT-Tools) zu führen, die sich zur Lösung eines Problems des Benutzers eignen. Das Sammeln von Informationen sowie die Bereitstellung von Werkzeugen ist zwar ein Teil der Erfindung, aber nicht deren Schwerpunkt. Vielmehr liegt der Kern der Erfindung darin, dass ausgehend von den Bedürfnissen (Ziel, Strategie, Aufgabe) eines Benutzers sowie dessen individuellen Benutzerprofil (wie zum Beispiel Benutzertyp, Position im Unternehmen, Abteilung, Größe des Unternehmens) ein Weg zur gewünschten Information und/oder zu einem geeigneten Werkzeug vorgeschlagen wird.

Die Erfindung löst das technische Problem zum einen mittels eines Verfahrens zum Implementieren eines interaktiven Kommunikationssystems zum Führen eines Benutzers zu wenigstens einem gewünschten Element unter Verwendung eines Kommunikationsnetzes, beispielsweise das Internet. An dieser Stelle sei erwähnt, dass mit dem Begriff "Element" zum Beispiel eine Information, ein Tool oder ein Lösungsvorschlag zu verstehen ist.

Das Verfahren weist folgende Schritte auf:
- Eingeben wenigstens eines individuellen Nutzerprofils in eine erste Datenbank, wobei das Nutzerprofil wenigstens einen benutzerspezifischen Parameter enthält;
- Eingeben mehrerer Benutzerbedürfnisse oder Maßnahmen in eine zweite Datenbank;
- Eingeben mehrerer vom Kommunikationssystem durchführbarer Aktionen in eine dritte Datenbank;
- Anmelden eines Benutzers am Kommunikationssystem mittels eines Rechners;
- automatisches Auswählen wenigstens eines Benutzerbedürfnisses aus der zweiten Datenbank in Abhängigkeit von wenigstens einem benutzerspezifischen Parameter, der in dem dem angemeldeten Benutzer zugeordneten individuellen Nutzerprofil enthalten ist;
- Darstellen der ausgewählten Benutzerbedürfnisse am Rechner des angemeldeten Benutzers;
- Auswählen wenigstens einer der ausgewählten Benutzerbedürfnisse am Rechner des angemeldeten Benutzers;
- automatisches Auswählen wenigstens einer in der dritten Datenbank gespeicherten Aktion in Abhängigkeit von dem wenigstens einen ausgewählten Benutzerbedürfnis, und
- Darstellen der ausgewählten Aktion am Rechner des angemeldeten Benutzers.

Ein Vorteil dieses Verfahrens ist darin zu sehen, dass im Gegensatz zu üblichen Suchmechanismen Ausgangspunkt nicht die verfügbaren Informationen oder Werkzeuge, sondern der Benutzer und dessen Bedürfnisse sind. Je nach den Bedürfnissen und dem Nutzerprofil des Benutzers werden entsprechende Maßnahmen mit den dazugehörigen möglichen Aktionen kontextabhängig vorgeschlagen. Auf diese Weise braucht sich der Benutzer zuerst nur auf seine Ziele und Aufgaben zu konzentrieren und er kann sich eine Antwort auf die Fragen "was will ich und was habe ich bereits" geben. Unter Anwendung des Verfahrens bekommt der Benutzer Antworten auf die Fragen "was brauche ich, um mein Ziel zu erreichen oder meine gestellte Aufgabe zu erledigen" automatisch vorgeschlagen. Dadurch kann der Aufwand für eine Recherche nach richtigen Informationen und Schulungen für die Werkzeugbedienung drastisch reduziert werden. An dieser Stelle sei angemerkt, dass es sich bei den Benutzerbedürfnissen um die folgenden Maßnahmen handeln kann:

Umsatz steigern, neue Kunden gewinnen, neue Vertriebskanäle finden, Kosten senken, Geschäftsabwicklungen verbessern, Firmen gründen, expandieren und dergleichen.

Bei den benutzerspezifischen Parametern eines Nutzerprofils kann es sich um einen Namen, die Branche, einen Nutzertyp, Position im Unternehmen, Abteilung, Anzahl der Mitarbeiter des Unternehmens und dergleichen handeln.

Das Verfahren kann dem Benutzer beispielsweise folgende Aktionen anbieten:
Einen Kunden per E-mail anschreiben, eine Suche im DMS (Dokumenten-Management-System) starten, ein Tool bestellen, nach Informationen über einen bestimmten Kunden suchen, Unternehmensinformationen im Internet veröffentlichen und vieles mehr.

Vorteilhafte Weiterbildungen sind Gegenstand der Unteransprüche.

Der Bedienungskomfort für einen Benutzer wird dadurch erhöht, dass wenigstens eine ausgewählte Aktion unter Berücksichtigung wenigstens eines benutzerspezifischen Parameters, der in dem dem angemeldeten zugeordneten individuellen Nutzerprofil enthalten ist, vom Kommunikationssystem durchgeführt wird, und dass das Ergebnis, insbesondere eine gewünschte Information und/oder ein gewünschtes Software-Werkzeug ausgegeben wird.

Die durchzuführende Aktion ist derart strukturiert, dass sie bei der Durchführung auf die im Kommunikationssystem implementierten Applikationen, wie zum Beispiel B2B-Broker, Logistik, Knowledge-Management, Expertenmarktplatz, Internet-Shop zugreifen kann.

Eine rasche und zielsichere Führung eines Benutzers zu einer gewünschten Information oder einem gewünschten Tool kann dadurch gefördert werden, dass das in der ersten Datenbank gespeicherte individuelle Nutzerprofil Parameter enthält, die an das Nutzungsverhalten des zugeordneten Benutzers angepasst werden.

Vorzugsweise werden die in der zweiten Datenbank abgelegten Benutzerbedürfnisse im XML-Format geschrieben.

Um die Bedürfnisse eines Benutzers bei der gezielten Führung zu einer gewünschten Information und/oder einem gewünschten Tool verbessern zu können, werden die in der zweiten Datenbank gespeicherten Benutzerbedürfnisse in mehrere Gruppen unterteilt, die unterschiedlich gewichtet sein können.

Das oben genannte technische Problem wird ebenfalls durch ein computerlesbares Medium mit darauf gespeichertem Programm zur Durchführung eines Verfahrens mit den folgenden Schritten gelöst:
- automatisches Auswählen wenigstens eines Benutzerbedürfnisses aus einer zweiten Datenbank in Abhängigkeit von wenigstens einem benutzerspezifischen Parameter, der in einem individuellen Nutzerprofil, welches in einer ersten Datenbank abgelegt ist, enthalten ist;
- Darstellen des wenigstens einen ausgewählten Benutzerbedürfnisse an dem Rechner eines an einem Kommunikationssystem angemeldeten Benutzers;
- automatisches Auswählen wenigstens einer in einer dritten Datenbank gespeicherten Aktion in Abhängigkeit von wenigstens einem vom angemeldeten Benutzer ausgewählten Benutzerbedürfnis, und
- Darstellen der ausgewählten Aktion am Rechner des angemeldeten Benutzers.

Zweckmäßigerweise sorgt das Programm dafür, dass wenigstens die eine ausgewählte Aktion unter Berücksichtigung wenigstens eines benutzerspezifischen Parameters, der in dem dem angemeldeten Benutzer zugeordneten individuellen Nutzerprofil enthalten ist, von dem Kommunikationssystem durchgeführt wird, und dass das Ergebnis, insbesondere eine gewünschte Information und/oder ein gewünschtes Software-Werkzeug, ausgegeben wird.

Zweckmäßigerweise ist das computerlesbare Medium dadurch gekennzeichnet, dass das in der ersten Datenbank gespeicherte individuelle Nutzerprofil Parameter enthält und dass das Programm dafür sorgt, dass diese Parameter an das Nutzungsverhalten des dem individuellen Nutzerprofil zugeordneten Benutzers angepasst werden.

Das oben genannte technische Problem wird ebenfalls durch ein Web-basiertes Kommunikationssystem zum Führen eines Benutzers zu wenigstens einem gewünschten Element gelöst.

Das Kommunikationssystem umfasst wenigstens eine erste Datenbank, in der wenigstens ein individuelles Nutzerprofil abgelegt ist, wobei das Nutzerprofil wenigstens einen benutzerspezifischen Parameter enthält, wenigstens eine zweite Datenbank, in der mehrere Benutzerbedürfnisse gespeichert sind, wenigstens eine dritte Datenbank, in der mehrere durchführbare Aktionen gespeichert sind, mehrere Dienstanbietende Server, mehrere Elemente bereitstellende Server, wenigstens einen Teilnehmer, der über wenigstens ein Kommunikationsnetz mit der ersten, zweiten und/oder dritten Datenbank und/oder den Servern kommunizieren kann. Ferner ist eine programmgesteuerte Einrichtung vorgesehen, die das Anmelden eines Teilnehmers am Kommunikationssystems überwacht, das automatische Auswählen wenigstens eines Benutzerbedürfnisses aus der zweiten Datenbank in Abhängigkeit von wenigstens einem benutzerspezifischen Parameter, der in dem dem angemeldeten Benutzer zugeordneten individuellen Nutzerprofil enthalten ist, veranlasst, das Darstellen der ausgewählten Benutzerbedürfnisse beim angemeldeten Teilnehmer veranlasst, das Auswählen wenigstens einer der ausgewählten Benutzerbedürfnisse beim angemeldeten Teilnehmer überwacht, das automatische Auswählen wenigstens einer in der dritten Datenbank gespeicherten Aktion in Abhängigkeit von dem wenigstens einen ausgewählten Benutzerbedürfnis veranlasst und das Darstellen der ausgewählten Aktion beim angemeldeten Teilnehmer veranlasst.

Die Erfindung wird nachfolgend anhand eines Ausführungsbeispiels in Verbindung mit den beiliegenden Zeichnungen näher erläutert.
- Fig. 1: zeigt schematisch ein Web-basiertes Kommunikationssystem, in dem die Erfindung verwirklicht ist, und
- Fig. 2: zeigt ein schematisches Blockschaltbild zur Erläuterung der Funktionsweise der Erfindung.

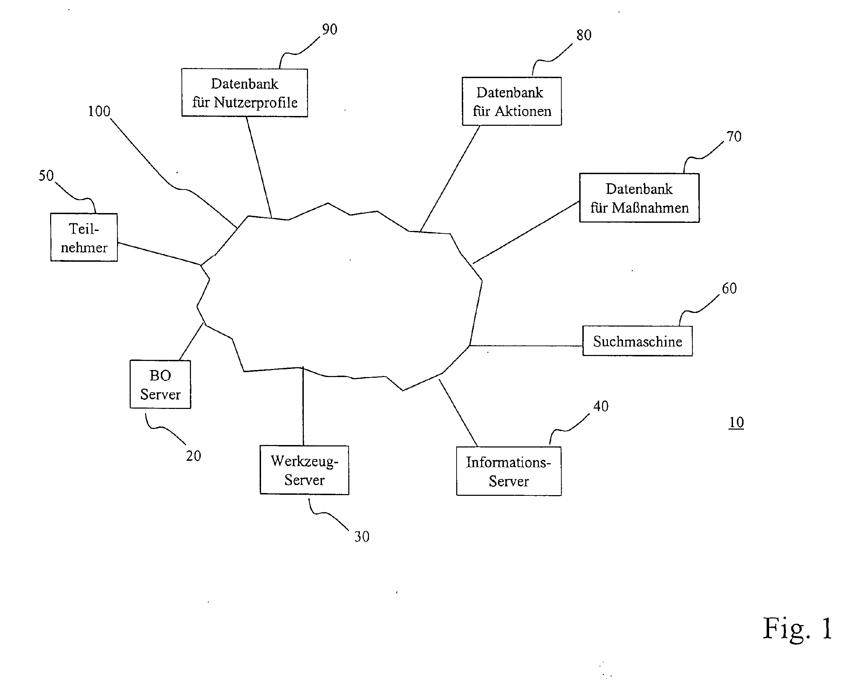

Fig. 1 zeigt beispielhaft ein Web-basiertes Kommunikationssystem 10, welches das Internet 100 benutzt, einen Teilnehmer 50, einen Business-Optimizer-Server, in der Fig. 1. auch BO-Server 20 genannt, einen Werkzeug-Server 30, einen Informations-Server 40, eine Suchmaschine 60, sowie Datenbanken 70, 80 und 90 zu verbinden. Bei dem Teilnehmer 50 kann es sich beispielsweise um einen Personalcomputer mit einem Internetzugang handeln.

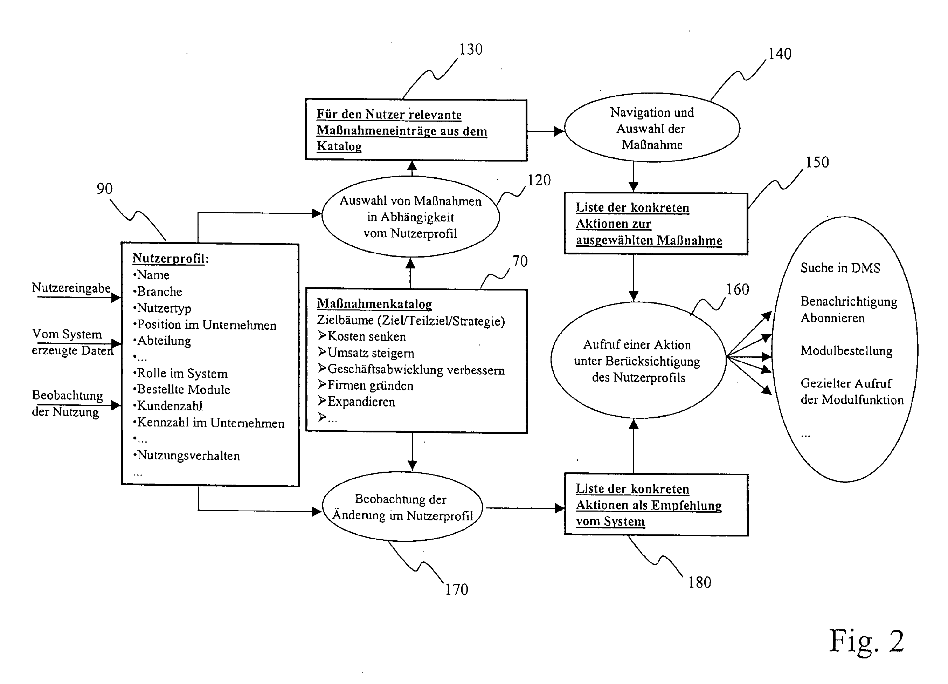

In dem BO-Server 20 sind zumindest Programmteile implementiert, die zur Durchführung des erfindungsgemäßen Verfahrens benötigt werden. In dem Werkzeug-Server 30 sind IT-Tools abrufbar. In dem Informations-Server 40 werden die Informationen beispielsweise eines Anbieters bereitgehalten. Es versteht sich, dass mehrere Informations-Server und Werkzeug-Server (und sogar Informations-Server-Netze und Werkzeug-Server-Netze) an das Internet angeschlossen sein können. Bei der Suchmaschine 60 handelt es sich um einen Computer, in dem eine Suchmaschine, wie zum Beispiel GOOGLE oder YAHOO implementiert sind. In der Datenbank 70 ist ein Maßnahmenkatalog abgespeichert, der eine Liste von allgemeinen und speziellen Bedürfnissen von Kunden enthält. Die Bedürfnisse oder Maßnahmen können in Ziele, Teilziele und Strategien eingeteilt sein.
Beispiele für Zielvorgaben sind: Kosten senken, Umsatz steigern, Geschäftsabwicklung verbessern, Firma gründen, expandieren.
Beispiele für Teilziele sind: neue Kunden gewinnen, mehr Aufträge von bekannten Kunden bekommen.
In die Gruppe "Strategie" des Maßnahmenkatalogs können folgende Bedürfnisse fallen: Sichtbarkeit oder Marketing verbessern, neue Vertriebskanäle finden, neue Kunden aktiv recherchieren, besser als die Konkurrenz sein, fachliche Kompetenz erweitern, Kundenbindung pflegen und ähnliches. Ein Auszug dieser Liste ist in Fig. 2 in der Datenbank 70 eingetragen.

In der Datenbank 80 sind Aktionen abgelegt, die vom Kommunikationssystem 10 ausgewählt und dem Benutzer vorgeschlagen und gegebenenfalls vom System 10 durchgeführt werden können. Solche Aktionen können sein: Suche in einem Domänname-Server, neue Vertriebspartner finden, 0700er-Service anbieten, ein bestimmtes IT-Modul bestellen, Kunden per E-mail anschreiben, nach Informationen über Kunden suchen, Unternehmensinformationen im Internet veröffentlichen, Internet-Shop aus- oder aufbauen.
Bei den in der Datenbank 80 abgespeicherten Aktionen kann es sich weiterhin um folgende Maßnahmen handeln: Abonnieren einer Benachrichtigung, Gehen zu einer bestimmten Funktion einer verfügbaren Applikation im Kommunikationssystem 10.

In der Datenbank 90 können Nutzerprofile der bereits am Kommunikationssystem 10 registrierten Benutzer hinterlegt sein. Neue Benutzer können bei der Anmeldung am BO-Server ihr Benutzerprofil in die Datenbank 90 eintragen Das Nutzerprofil kann folgende Parameter umfassen: Name, Branche, Nutzertyp, Position im Unternehmen, Abteilung, Anzahl der Mitarbeiter.

Fig. 2 zeigt unter anderem die in der Datenbank 90 abgelegten Parameter. Die Parameter können unterschieden werden in Parameter, die von einem Nutzer eingegeben werden, und von Parametern, die vom System 10 erzeugt werden. Zu den letzt genannten Parametern zählen auch Parameter, die das Nutzungsverhalten eines Benutzers widerspiegeln. Hierzu kann das Nutzungsverhalten der Benutzer vom Kommunikationssystem 10, beispielsweise vom BO-Server 20 überwacht werden. Bestimmte Parameter werden dann an das Benutzerverhalten angepasst.

Die Erfindung wird nachfolgend anhand eines Ausführungsbeispiels näher erläutert.

Angenommen sei, dass Teilnehmer 50 ein Personalcomputer ist, der in einem Unternehmen A aufgestellt ist. Es sei ferner angenommen, dass sich eine berechtigte Person des Unternehmens A über den Personalcomputer 50 an dem Kommunikationssystem 10 angemeldet hat und folgende Nutzerprofildaten für ihr Unternehmen in die Datenbank 90 geschrieben hat:
KMU (kleines und mittleres Unternehmen) als Nutzertyp, Handel als Branche, Geschäftsleitung als Abteilung.

Anschließend ruft die berechtigte Person den BO-Server 20 zur Durchführung des Programms "Business-Optimizer" auf. Der BO-Server 20 verwendet die Parameter "KMU", "Handel" und "Geschäftsleitung" als Filterparameter, um aus dem in der Datenbank 70 gespeicherten Maßnahmenkatalog bestimmte Maßnahmen oder Bedürfnisse auszuwählen, die durch das Nutzerprofil als geeignet definiert werden. Dieser Sachverhalt ist in Fig. 2 durch die Blöcke 70, 90, 120 und 130 wiedergegeben. Gemäß dem ovalen Tätigkeitsblock 120 werden aus dem Maßnahmenkatalog, welcher in der Datenbank 70 gespeichert ist, in Abhängigkeit von dem in der Datenbank 90 hinterlegten Nutzerprofil vorbestimmte Maßnahmeneinträge ausgewählt und am Computer 50 dargestellt, wie dies in Block 130 dargestellt ist. Aus den am Personalcomputer 50 dargestellten Maßnahmen kann die berechtigte Person des Unternehmens A entsprechend dem ovalen Tätigkeitsblock 140 eine oder auch mehrere Maßnahmen auswählen. Eine solche Maßnahme kann zum Beispiel lauten: "Personal im Bereich Online-Shop erweitern". Die im BO-Server 20 hinterlegte Software sorgt dafür, dass in Abhängigkeit von der ausgewählten Maßnahme eine Liste konkreter Aktionen aus der Datenbank 80 ausgelesen und am Personalcomputer 50 dargestellt wird. Die vom BO-Server 20 vorgeschlagenen Aktionen können sein: "Suche nach Experten im Expertenmarktplatz, Anfrage im Expertenmarktplatz einstellen."

Die am Personalcomputer 50 dargestellte Liste konkreter Aktionen wird durch Block 150 in Fig. 2 dargestellt. Gemäß dem ovalen Tätigkeitsblock 160 kann die beauftragte Person des Unternehmens A am Personalcomputer 50 eine oder mehrere der aufgelisteten Aktionen umsetzen oder starten. Wird zum Beispiel die Aktion "Suche nach Experten im Expertenmarktplatz" gestartet, werden neben den gegebenenfalls eingegebenen Suchkriterien, wie zum Beispiel "Alter, Ausbildung, Sprachkenntnis" auch die Parameter "KMU" und "Handel" des in der Datenbank 90 hinterlegten Nutzerprofils des Unternehmens A berücksichtigt. Auf diese Weise stellt der BO-Server 20 sicher, dass beispielsweise nur diejenigen Jobsuchenden in dem Informations-Server 40 gefunden werden, die Interesse haben, in einem kleinen und mittleren Unternehmen in der Branche Handel zu arbeiten.

Gemäß einer vorteilhaften Weiterbildung des Kommunikationssystems 10 beobachtet der BO-Server 20 das Nutzungsverhalten eines angemeldeten Benutzers, welches in der Datenbank 90 neben dem gespeicherten Nutzerprofil protokolliert wird. Parameter für das Nutzungsverhalten können häufig gewählte Internet-Adressen oder ausgewählte Aktionen sein. Auf diese Weise ist es möglich, Zuordnungen zwischen den in der Datenbank 70 gespeicherten Maßnahmen und den vom Nutzungsverhalten eines Benutzers abhängigen Parametern herzustellen, welche vom BO-Server 20 verwendet wird, um eine Liste konkreter Aktionen als Empfehlung des Kommunikationssystems 10 für einen bestimmten Benutzer bereitzuhalten, wie dies durch den Tätigkeitsblock 170 in Verbindung mit Block 180 dargestellt ist. Dank einer vom Nutzungsverhalten abhängigen Aktionsliste kann der Suchvorgang für einen Teilnehmer beschleunigt werden. Denn bereits nach dem Anmelden des Teilnehmers 50 am Kommunikationssystem 10 und dem anschließenden Aufrufen des Business-Optimizers im BO-Server 20 kann dem Benutzer die als Empfehlung gespeicherte Liste konkreter Aktionen an seinem Personalcomputer angezeigt werden. Gemäß ovalem Tätigkeitsblock 140 kann dann der Benutzer in den angezeigten Aktionen navigieren und eine oder mehrere vorbestimmte Aktionen starten.

## Patentansprüche

1. Verfahren zum Implementieren eines interaktiven Kommunikationssystems (10) zum Führen eines Benutzers zu wenigstens einem gewünschten Element unter Verwendung eines Kommunikationsnetzes (100), wobei das Verfahren folgende Schritte umfasst:
- Eingeben wenigstens eines individuellen Nutzerprofils in eine erste Datenbank (90), wobei das Nutzerprofil wenigstens einen benutzerspezifischen Parameter enthält;
- Eingeben mehrerer Benutzerbedürfnisse in eine zweite Datenbank (70);
- Eingeben mehrerer vom Kommunikationssystem durchführbarer Aktionen in eine dritte Datenbank (80);
- Anmelden eines Benutzers am Kommunikationssystem (10) mittels eines Rechners (50);
- automatisches Auswählen wenigstens eines Benutzerbedürfnisses aus der zweiten Datenbank (70) in Abhängigkeit von wenigstens einem benutzerspezifischen Parameter, der in dem dem angemeldeten Benutzer zugeordneten individuellen Nutzerprofil enthalten ist;
- Darstellen der ausgewählten Benutzerbedürfnisse am Rechner (50) des angemeldeten Benutzers;
- Auswählen wenigstens einer der ausgewählten Benutzerbedürfnisse am Rechner (50) des angemeldeten Benutzers;
- automatisches Auswählen wenigstens einer in der dritten Datenbank (80) gespeicherten Aktion in Abhängigkeit von dem wenigstens einen ausgewählten Benutzerbedürfnis, und
- Darstellen der ausgewählten Aktion am Rechner (50) des angemeldeten Benutzers.

2. Verfahren nach Anspruch 1,
**dadurch gekennzeichnet, dass**
wenigstens die eine ausgewählte Aktion unter Berücksichtigung wenigstens eines benutzerspezifischen Parameters, der in dem dem angemeldeten Benutzer zugeordneten individuellen Nutzerprofil enthalten ist, vom Kommunikationssystem durchgeführt wird, und dass das Ergebnis, insbesondere eine gewünschte Information und/oder ein gewünschtes Software-Werkzeug ausgegeben wird.

3. Verfahren nach Anspruch 2,
**dadurch gekennzeichnet, dass**
bei der Durchführung der ausgewählten Aktion auf im Kommunikationssystem (10) implementierte Applikationen zugegriffen wird.

4. Verfahren nach Anspruch 1, 2 oder 3,
**dadurch gekennzeichnet, dass**
das in der ersten Datenbank (90) gespeicherte individuelle Nutzerprofil Parameter enthält, die an das Nutzungsverhalten des zugeordneten Benutzers angepasst werden.

5. Verfahren nach einem der Ansprüche 1 bis 4,
**dadurch gekennzeichnet, dass**
die Benutzerbedürfnisse im XML-Format abgelegt sind.

6. Verfahren nach einem der Ansprüche 1 bis 5,
**dadurch gekennzeichnet, dass**
die in der zweiten Datenbank (70) gespeicherten Benutzerbedürfnisse in mehrere Gruppen unterteilt sind, die unterschiedlich gewichtet sein können.

7. Computerlesbares Medium mit darauf gespeichertem Programm zur Durchführung eines Verfahrens mit folgenden Schritten:
- automatisches Auswählen wenigstens eines Benutzerbedürfnisses aus einer zweiten Datenbank (70) in Abhängigkeit von wenigstens einem benutzerspezifischen Parameter, der in einem individuellen Nutzerprofil, welches in einer ersten Datenbank (90) abgelegt ist, enthalten ist;
- Darstellen des wenigstens einen ausgewählten Benutzerbedürfnisse an dem Rechner (50) eines an einem Kommunikationssystem angemeldeten Benutzers;
- automatisches Auswählen wenigstens einer in einer dritten Datenbank (80) gespeicherten Aktion in Abhängigkeit von wenigstens einem, vom angemeldeten Benutzer ausgewählten Benutzerbedürfnis, und
- Darstellen der ausgewählten Aktion am Rechner (50) des angemeldeten Benutzers.

8. Computerlesbares Medium nach Anspruch 7,
**dadurch gekennzeichnet, dass**
das Programm veranlasst, dass
wenigstens die eine ausgewählte Aktion unter Berücksichtigung wenigstens eines benutzerspezifischen Parameters, der in dem dem angemeldeten Benutzer zugeordneten individuellen Nutzerprofil enthalten ist, von dem Kommunikationssystem (10, 20) durchgeführt wird, und dass
das Ergebnis, insbesondere eine gewünschte Information und/oder ein gewünschtes Software-Werkzeug ausgegeben wird.

9. Computerlesbares Medium nach einem der Ansprüche 7 oder 8,
**dadurch gekennzeichnet, dass**
das in der ersten Datenbank (90) gespeicherte individuelle Nutzerprofil Parameter enthält, und dass das Programm veranlasst, dass diese Parameter an das Nutzungsverhalten des dem individuellen Nutzerprofil zugeordneten Benutzers angepasst werden.

10. Web-basiertes Kommunikationssystem (10) zum Führen eines Benutzers zu wenigstens einem gewünschten Element, umfassend
wenigstens eine erste Datenbank (90), in der wenigstens ein individuelles Nutzerprofil abgelegt ist, wobei das Nutzerprofil wenigstens einen benutzerspezifischen Parameter enthält,
wenigstens eine zweite Datenbank (70), in der mehrere Benutzerbedürfnisse gespeichert sind,
wenigstens eine dritte Datenbank (80), in der mehrere vom durchführbare Aktionen gespeichert sind,
mehrere Dienstanbietende Server (60),
mehrere Elemente bereitstellende Server (30, 40), wenigstens ein Teilnehmer (50), der über wenigstens ein Kommunikationsnetz (100) mit der ersten, zweiten und/oder dritten Datenbank (90, 70, 80) und/oder den Servern (30, 40, 60) kommunizieren kann, und
eine programmgesteuerte Einrichtung (20), die das Anmelden eines Teilnehmers (50) am Kommunikationssystem (10) überwacht;
das automatische Auswählen wenigstens eines Benutzerbedürfnisses aus der zweiten Datenbank (70) in Abhängigkeit von wenigstens einem benutzerspezifischen Parameter, der in dem dem angemeldeten Benutzer zugeordneten individuellen Nutzerprofil enthalten ist, veranlasst;
das Darstellen der ausgewählten Benutzerbedürfnisse beim angemeldeten Teilnehmer (50) veranlasst;
das Auswählen wenigstens einer der ausgewählten Benutzerbedürfnisse beim angemeldeten Teilnehmer (50) überwacht;
das automatische Auswählen wenigstens einer in der dritten Datenbank (80) gespeicherten Aktion in Abhängigkeit von dem wenigstens einen ausgewählten Benutzerbedürfnis veranlasst, und
das Darstellen der ausgewählten Aktion beim angemeldeten Teilnehmer (50) veranlasst.
